(19) Europäisches Patentamt
European Patent Office
Office européen des brevets

(11) **EP 2 386 529 A1**

(12) **EUROPEAN PATENT APPLICATION**
published in accordance with Art. 153(4) EPC

(43) Date of publication:
**16.11.2011 Bulletin 2011/46**

(51) Int Cl.:
***C04B 35/46*** *(2006.01)*

(21) Application number: **09835027.5**

(22) Date of filing: **25.12.2009**

(86) International application number:
**PCT/JP2009/071595**

(87) International publication number:
**WO 2010/074231 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.12.2008 JP 2008330981**

(71) Applicant: **Sumitomo Chemical Company, Limited Tokyo 104-8260 (JP)**

(72) Inventors:
• **UOE, Kousuke**
**Niihama-shi**
**Ehime 792-0002 (JP)**
• **SUZUKI, Keiichiro**
**Niihama-shi**
**Ehime 792-0871 (JP)**
• **KAN, Masahiro**
**Niihama-shi**
**Ehime 792-0865 (JP)**
• **YOSHINO, Hajime**
**Niihama-shi**
**Ehime 792-0009 (JP)**

(74) Representative: **Vossius & Partner**
**Siebertstrasse 4**
**81675 München (DE)**

(54) **PROCESS PRODUCING ALUMINUM TITANATE-BASED FIRED BODY**

(57) The invention is to provide a process which can produce a fired body comprising aluminum titanate-based ceramics being excellent in thermal decomposition resistance and having high mechanical strength. The invention is a process for producing an aluminum titanate-based fired body, comprising a step of firing a shaped body of a starting material mixture which contains an aluminum source powder and a titanium source powder, and the aluminum source powder satisfies the following formula (1). In the formula, D90 is a particle diameter corresponding to a cumulative percentage of 90 % on a volume basis and D10 is a particle diameter corresponding to a cumulative percentage of 10 % on a volume basis, and these are determined from a particle size distribution of the aluminum source powder measured by a laser diffractometry.

$$(D90/D10)^{1/2} \geq 2 \qquad (1)$$

Fig.1

EP 2 386 529 A1

**Description**

TECHNICAL FIELD

The present invention relates to a process for producing a fired body comprising an aluminum titanate-based ceramics, and particularly relates to a process for producing a fired body of an aluminum titanate-based ceramics by firing a shaped body of a starting material mixture which contains an aluminum source powder and a titanium source powder.

BACKGROUND ART

An aluminum titanate-based ceramics is a ceramics containing titanium and aluminum as the constitutive elements and showing a crystal pattern of aluminum titanate in X-ray diffraction spectrum, and is known as a ceramics excellent in heat resistance. An Aluminum titanate-based ceramics have been conventionally used as firing tools such as crucibles, and recently an industrial applicability thereof has been increased as materials for constituting ceramics filters for collecting fine carbon particles contained in exhaust gas discharged from internal combustion engines such as diesel engines.
As a process for producing aluminum titanate-based ceramics, known is a process of firing a starting material mixture containing a powder of a titanium source compound such as titania and a powder of an aluminum source compound such as alumina (Patent Reference 1).

PRIOR ART REFERENCE

PATENT REFERENCE

Patent Reference 1: WO05/105704

SUMMARY OF THE INVENTION

PROBLEMS THAT THE INVENTION IS TO SOLVE

It is known that aluminum titanate has a high melting point of 1860°C and is, as described above, excellent in heat resistance, but on the other hand, generally exhibits the behavior of decomposing into alumina ($Al_2O_3$) and titania ($TiO_2$) at a temperature around 800 to 1200°C and is therefore a material having extremely low thermal decomposition resistance.
When an aluminum titanate-based ceramics is applied to, for example, the above-mentioned ceramics filters for diesel engines, the ceramics may be exposed to strong vibration and the like, and is therefore required to have excellent mechanical strength.
Accordingly, an object of the invention is to provide a process capable of producing a fired body of an aluminum titanate-based ceramics which is excellent in thermal decomposition resistance and has high mechanical strength.

MEANS FOR SOLVING THE PROBLEMS

The invention provides a process for producing an aluminum titanate-based fired body, comprising a step of firing a shaped body of a starting material mixture which contains an aluminum source powder and a titanium source powder, and
the aluminum source powder satisfies the following formula (1):

$$(D90/D10)^{1/2} \geq 2 \qquad (1)$$

wherein D90 is a particle diameter corresponding to a cumulative percentage of 90 % on a volume basis and D10 is a particle diameter corresponding to a cumulative percentage of 10 % on a volume basis, and these are determined from a particle size distribution of the aluminum source powder measured by a laser diffractometry.
In the starting material mixture, a ratio of a molar amount of the aluminum source powder to a molar amount of the titanium source powder (the molar amount of the aluminum source powder / the molar amount of the titanium source powder) is preferably from 35/65 to 45/55.

The starting material mixture may further contain a magnesium source powder. In this case, a ratio of a molar amount of the magnesium source powder to a total of a molar amount of the aluminum source powder and a molar amount of the titanium source powder is preferably from 0.03 to 0.15.

The molar amount of the aluminum source powder means an $Al_2O_3$(alumina)-equivalent molar amount, and is calculated by the following formula (A) (the same shall apply hereinafter in molar amount calculation).

$$\text{Molar amount of the aluminum source powder} = (w_1 \times M_1)/(N_1 \times 2) \quad (A)$$

In the formula (A), $w_1$ represents an amount (g) of the aluminum source powder to be used; $M_1$ represents the molar amount of aluminum in 1 mol of the aluminum source powder; $N_1$ represents the formula weight of the aluminum source powder. When two or more types of aluminum source powders are used, the molar amount of each aluminum source powder is calculated by the formula (A), and each molar amount are summed up to give the molar amount of the aluminum source powders to be used.

The molar amount of the titanium source powder means a $TiO_2$(titania)-equivalent molar amount, and is calculated by the following formula (B) (the same shall apply hereinafter in molar amount calculation).

$$\text{Molar amount of the titanium source powder} = (w_2 \times M_2)/N_2 \quad (B)$$

In the formula (B), $w_2$ represents an amount (g) of the titanium source powder to be used; $M_2$ represents the molar amount of titanium in 1 mol of the titanium source powder; $N_2$ represents the formula weight of the titanium source powder. When two or more types of titanium source powders are used, the molar amount of each titanium source powder is calculated by the formula (B), and each molar amount are summed up to give the molar amount of the titanium source powders to be used.

The molar amount of the magnesium source powder means a MgO (magnesia) -equivalent molar amount, and is calculated by the following formula (C) (the same shall apply hereinafter in molar amount calculation).

$$\text{Molar amount of the magnesium source powder} = (w_3 \times M_3)/N_3 \quad (C)$$

In the formula (C), $w_3$ represents an amount (g) of the magnesium source powder to be used; $M_3$ represents the molar amount of magnesium in 1 mol of the magnesium source powder; $N_3$ represents the formula weight of the magnesium source powder. When two or more types of magnesium source powders are used, the molar amount of each magnesium source powder is calculated by the formula (C), and each molar amount are summed up to give the molar amount of the magnesium source powders to be used.

Particle diameters of both the titanium source powder and the magnesium source powder corresponding to a cumulative percentage of 50 % on a volume basis (hereinafter indicated as D50) are from 0.5 to 35 $\mu$m.

The starting material mixture may further contains a silicon source powder. The silicon source powder is preferably feldspar, glass frit, or a mixture thereof. A ratio of a $SiO_2$-equivalent molar amount of the silicon source powder to a total of a $Al_2O_3$-equivalent molar amount of the aluminum source powder and a $TiO_2$-equivalent molar amount of the titanium source powder is preferably from about 0.0011 to about 0.123. D50 of the silicon source powder is preferably from 0.5 to 30 $\mu$m.

The molar amount of the silicon source powder means a $SiO_2$ (silica)-equivalent molar amount, and is calculated by the following formula (D) (the same shall apply hereinafter in molar amount calculation).

$$\text{Molar amount of the silicon source powder} = (w_4 \times M_4)/N_4 \quad (D)$$

In the formula (D), $w_4$ represents an amount (g) of the silicon source powder to be used; $M_4$ represents the molar amount of silicon in 1 mol of the silicon source powder; $N_4$ represents the formula weight of the silicon source powder. When two or more types of silicon source powders are used, the molar amount of each silicon source powder is calculated by the formula (D), and each molar amount are summed up to give the molar amount of the silicon source powders to be used.

In this description "D50" means a particle diameter corresponding to a volume-based cumulative percentage of 50 % which is measured through a laser diffractometry.

As a shape of the shaped body of the starting material mixture can be, for example, a honeycomb shape. A firing temperature is, for example, from 1300 to 1650 °C and a firing time is, for example, from 10 minutes to 24 hours.

ADVANTAGE OF THE INVENTION

By the production process of the invention, an aluminum titanate-based fired body which is excellent in thermal decomposition resistance and has improved mechanical strength can be produced.

BRIEF DESCRIPTION OF THE DRAWING

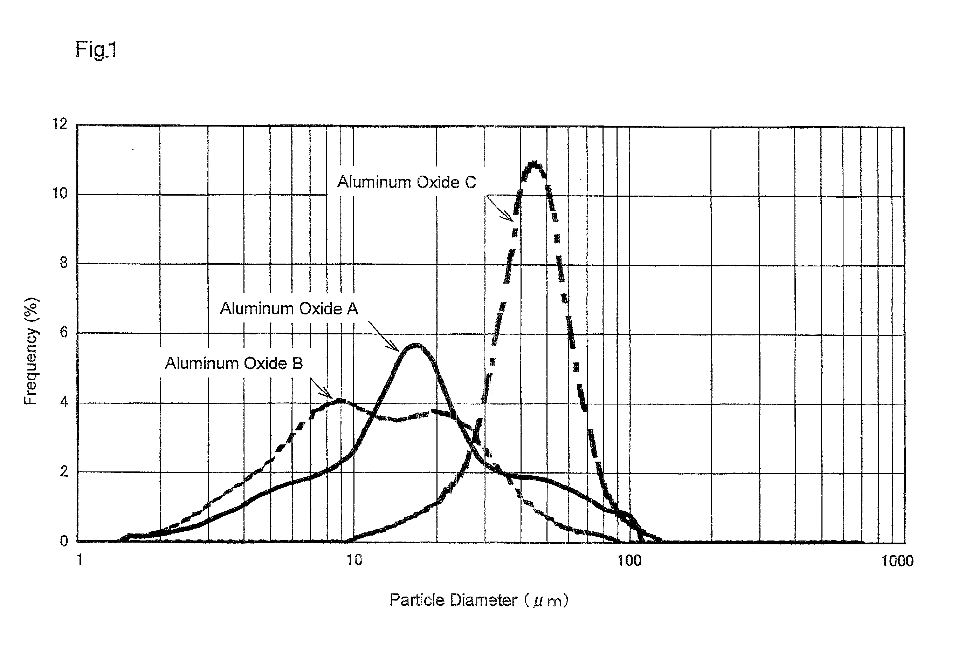

[Fig. 1] Fig. 1 is a graph showing the particle size distribution of the aluminum oxide powders A to C used in Example 1, Example 2 and Comparative Example 1.

BEST MODE FOR CARRYING OUT THE INVENTION

The aluminum titanate-based fired body in the invention is produced by firing a shaped body of a starting material mixture containing an aluminum source powder and a titanium source powder. The aluminum titanate-based fired body obtained by the use of the starting material mixture is a fired body comprising an aluminum titanate-based crystal.

The aluminum source powder contained in the starting material mixture to be used in the invention is a powder of a material that will become an aluminum ingredient constituting the aluminum titanate-based fired body. The aluminum source powder includes, for example, a powder of alumina (aluminum oxide). The alumina may be crystalline or amorphous. When the alumina is crystalline, the crystal form thereof includes a $\gamma$-form, a $\delta$-form, a $\theta$-form, and an $\alpha$-form, and an $\alpha$-form alumina is preferably used.

The aluminum source powder for use in the invention may be a powder of a material capable of being led to alumina by firing in air. The material includes, for example, aluminum salt, aluminum alkoxide, aluminum hydroxide, and aluminum.

The aluminum salt may be a salt with an inorganic acid (inorganic salt), or a salt with an organic acid (organic salt) . The aluminum inorganic salt particularly includes, for example, nitrates such as aluminum nitrate, ammonium aluminum nitrate; and carbonates such as ammonium aluminum carbonate. The aluminum organic salt includes, for example, aluminum oxalate, aluminum acetate, aluminum stearate, aluminum lactate, and aluminum laurate.

Particularly, the aluminum alkoxide includes, for example, aluminum isopropoxide, aluminum ethoxide, aluminum sec-butoxide, and aluminum tert-butoxide.

The aluminum hydroxide may be crystalline or amorphous. When the aluminum hydroxide is crystalline, the crystal form thereof includes, for example, a gibbsite form, a bayerite form, a norstrandite form, a boehmite form, and a pseudo-boehmite form. Amorphous aluminum hydroxide includes, for example, an aluminum hydrolyzate to be obtained by hydrolysis of an aqueous solution of a water-soluble aluminum compound such as aluminum salt, aluminum alkoxide.

In the invention, as the aluminum source powder, one type alone may be used or two or more types may be used in combination with each other.

Of the above, an alumina powder is preferably used as the aluminum source powder, and an $\alpha$-form alumina powder is more preferred. The aluminum source powder may contain minor components that are derived from the starting materials thereof or are inevitably contained in the production process.

Here, as the aluminum source powder in the invention, an aluminum source powder satisfying the following formula (1) is used.

$$(D90/D10)^{1/2} \geq 2 \quad (1)$$

In the above formula (1), D90 is a particle diameter corresponding to a cumulative percentage of 90 % on a volume basis and D10 is a particle diameter corresponding to a cumulative percentage of 10 % on a volume basis, and these are determined from a particle size distribution measured by a laser diffractometry.

The above formula (1) means that D90/D10 is relatively large, and indicates that the particle diameter range of the aluminum source powder to be used is relatively broad. Using an aluminum source powder having a relatively broad particle diameter range satisfying$(D90/D10)^{1/2}$ is 2 or more improves the fillability of the starting material powder in the shaped body of the starting material mixture to be fired, therefore making it possible to obtain a fired body that is dense and therefore has high mechanical strength. Using the aluminum source powder satisfying the above formula (1) also improves the thermal decomposition resistance.

When the aluminum source powder satisfying the above formula (1) is used, the particles of the aluminum source powder exist to surround the particles of a titanium source powder in aluminum titanate forming reaction by firing of the shaped body of the starting material mixture, and the reaction goes on rapidly without significant movement of the particles of the starting material powders, and therefore a fired body having high strength (for example, having high bending strength) can be obtained. In addition, a fired body that exhibits good pore characteristics, on the other hand, that is dense can be obtained, the obtained aluminum titanate-based fired body exhibits a small thermal expansion coefficient.

$(D90/D10)^{1/2}$ of the above formula (1) is preferably 2.5 or more, and is preferably 4 or less. When $(D90/D10)^{1/2}$ is more than 4, the effect of improving the mechanical strength (bending strength) of the fired body may tend to lower. It may be considerd that this is because the fillability of the starting material powder in the shaped body would lower and the aluminum titanate forming reaction would hardly go on.

The aluminum source powder to be used in the invention may have a single modal particle size distribution or a bimodal particle size distribution or may have three or more particle size peaks, so far as satisfies the above formula (1).

The method for preparing the aluminum source powder satisfying the above formula (1) is not specifically limited. The aluminum source powder of the type may be prepared, for example, according to the following method.

(a) A method of mixing aluminum source powders each having a different particle size distribution. For example, a method of mixing an aluminum source powder having D50 of from 0. 5 to 10 $\mu$m and an aluminum source powder having D50 in a range of from 10 to 60 $\mu$m can be included.

(b) A method of grinding an aluminum source powder having a relatively large particle diameter for a predetermined period of time. For example, a method of grinding an aluminum source powder having D50 of from 15 to 75 $\mu$m for a predetermined period of time can be included.

(c) A method of firing an aluminum source to be led to aluminum oxide by firing for a predetermined period of time. For example, a method of firing an aluminum hydroxide powder for a predetermined period of time can be included. D50 of the aluminum source powder to be led to aluminum oxide by firing (for example, aluminum hydroxide powder) is preferably from 5 to 60 $\mu$m or so.

(d) A method of granulating an aluminum source powder having a relatively small particle diameter under a predetermined condition.

(e) A method of obtaining the aluminum source powder that satisfies the above formula (1) through coprecipitation.

D50 of the aluminum source powder is preferably from 5 to 35 $\mu$m, and more preferably from 10 to 30 $\mu$m. Using the aluminum source powder having such particle diameter range improves the mechanical strength of the fired body more effectively.

The titanium source powder contained in the starting material mixture is a powder of a material that will become a titanium ingredient constituting the aluminum titanate-based fired body, and the material includes, for example, a powder of titanium oxide. Titanium oxide includes, for example, titanium(IV) oxide, titanium(III) oxide, and titanium(II) oxide. Titanium(IV) oxide is preferably used. The titanium (IV) oxide may be crystalline or amorphous. When the titanium (IV) oxide is crystalline, the crystal form thereof includes an anatase form, a rutile form, and a brookite form. An anatase-form or rutile- form titanium(IV) oxide is more preferred.

The titanium source powder to be used in the invention may be a powder of a material to be led to titania (titanium oxide) by firing in air. The material includes, for example, titanium salt, titanium alkoxide, titanium hydroxide, titanium nitride, titanium sulfide, and titanium.

The titanium salt particularly includes titanium trichloride, titanium tetrachloride, titanium(IV) sulfide, titanium (VI) sulfide, andtitanium(IV) sulfate. The titanium alkoxide particularly includes titanium(IV) ethoxide, titanium(IV) methoxide, titanium(IV) t-butoxide, titanium(IV) isobutoxide, titanium(IV) n-propoxide, titanium(IV) tetraisopropoxide, and their chelate compounds.

In the invention, as the titanium source powder, one type alone may be used or two or more types may be used in combination with each other.

Of the above, a titanium oxide powder is preferably used as the titanium source powder, and a titanium(IV) oxide powder is more preferred. The titanium source powder may contain minor components that are derived from the starting materials thereof or are inevitably contained in the production process.

The particle diameter of the titanium source powder is not specifically limited, in general, a powder having D50 of from 0.5 to 35 $\mu$m is used. For obtaining an aluminum titanate-based fired body which is more excellent in thermal decomposition resistance and mechanical strength (bending strength), a titanium source powder having D50 of from 1 to 25 $\mu$m is preferably used. The particle size distribution of the titanium source powder may be bimodal, and in the case of bimodal, the particle diameter of the peak having a larger particle diameter is preferably from 20 to 35 $\mu$m.

In the invention, the ratio of a molar amount of the aluminum source powder to a molar amount of the titanium source powder in the starting material mixture (molar amount of aluminum source powder / molar amount of titanium source powder) is preferably from 35/65 to 45/55, more preferably from 40/60 to 45/55. Using the titanium source powder within the range makes it possible to reduce a firing shrinkage of the shaped body of the starting material mixture (shrinkage of the shaped body in firing).

The starting material mixture may contain a magnesium source powder. When the starting material mixture contains a magnesium source powder, the aluminum titanate-based fired body to be obtained is a fired body comprising an aluminum magnesium titanate crystal. The magnesium source powder includes a powder of magnesia (magnesium oxide) and a powder of a material to be led to magnesia by firing in air. Examples of the latter include, for example, magnesium salt, magnesium alkoxide, magnesium hydroxide, magnesium nitride, and magnesium.

The magnesium salt particularly includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

The magnesium alkoxide particularly includes magnesium methoxide, and magnesium ethoxide. The magnesium source powder may contain minor components that are derived from the starting materials thereof or are inevitably contained in the production process.

As the magnesium source powder, a powder of a material serving both as a magnesium source and an aluminum source can also be used. The material includes, for example, magnesia spinel ($MgAl_2O_4$). When a powder of a material serving both as a magnesium source and an aluminum source is used as the magnesium source powder, the ratio of the total of the $Al_2O_3$-equivalent molar amount of the aluminum source powder and the $Al_2O_3$-equivalent molar amount of the Al ingredient contained in the powder of the substance serving both as a magnesium source and an aluminum source, to the $TiO_2$-equivalent molar amount of the titanium source powder is so controlled as to fall within the above-mentioned range in the starting material mixture.

In the invention, as the magnesium source powder, one type alone may be used or two or more types may be used in combination with each other.

The particle diameter of the magnesium source powder is not specifically limited, in general, a powder having D50 of from 0.5 to 30 $\mu$m is used. For obtaining an aluminum titanate-based fired body which is more excellent in thermal decomposition resistance and mechanical strength, a magnesium source powder having D50 of from 3 to 25 $\mu$m is preferably used.

The molar ratio of the content (molar amount) of the magnesium source powder in the starting material mixture to the total of the molar amount of the aluminum source powder and the molar amount of the titanium source powder is preferably from 0.03 to 0.15, more preferably from 0.03 to 0.12. Controlling the content of the magnesium source powder within the range makes it possible to more improve the thermal decomposition resistance of the aluminum titanate-based fired body.

The starting material mixture may further contain a silicon source powder. The silicon source powder is a powder of a material that will be contained in the aluminum titanate-based fired body as a silicon ingredient, and combination use of a silicon source powder makes it possible to produce an aluminum titanate-based fired body having more improved thermal decomposition resistance. The silicon source powder includes, for example, a powder of silicon oxide (silica) such as silicon dioxide, and silicon monoxide.

The silicon source powder may also be a powder of a material capable of being led to silica by firing in air. The material includes, for example, silicic acid, silicon carbide, silicon nitride, silicon sulfide, silicon tetrachloride, silicon acetate, sodium silicate, sodium orthosilicate, feldspar, and glass frit. Feldspar, glass frit and the like are preferably used and glass frit and the like are more preferably used from the viewpoint of easiness of industrial availability and stable composition. Glass frit is flaky or powdery glass to be obtained by pulverizing glass. It is also preferable that a powder comprising a mixture of feldspar and glass frit is used as the silicon source powder.

When glass frit is used, one having an yield point of 700°C or higher is preferably used from the viewpoint of more improving the thermal decomposition resistance of the aluminum titanate-based fired body to be obtained. In the invention, the yield point of glass frit is measured with a thermo-mechanical analyzer (TMA). The yield point of glass frit is defined as a temperature (°C) at which expansion stops and then shrinkage starts next in a heating process of glass frit.

As the glass constituting the above-mentioned glass frit, an ordinary silicate glass that comprises silica [$SiO_2$] as the main ingredient thereof (contained in an amount of more than 50 % by mass of all the constitutive ingredients) can be used. Like an ordinary silicate glass, the glass constituting the glass frit may contain alumina $[Al_2O_3]$, sodium oxide $[Na_2O]$, potassium oxide $[K_2O]$, calcium oxide $[CaO]$, magnesia $[MgO]$ and the like as the other constitutive ingredients than silica. The glass to constituting the glass frit may contain $ZrO_2$ for improving the hot water resistance of the glass itself.

In the invention, as the silicon source powder, one type alone may be used or two or more types may be used in combination with each other.

The particle diameter of the silicon source powder is not specifically limited, and in general, one having D50 of from 0.5 to 30 $\mu$m is used. For more increasing the filling rate of the shaped body of the starting material mixture, a silicon source powder having D50 of from 1 to 20 $\mu$m is preferably used.

When the starting material mixture contains a silicon source powder, the ratio of the $SiO_2$-equivalent molar amount of the silicon source powder to the total of the $Al_2O_3$-equivalent molar amount of the aluminum source powder and the $TiO_2$-equivalent molar amount of the titanium source powder in the starting material mixture is preferably from about 0.0011 to about 0.123, more preferably 0.073 or less. The silicon source powder may contain minor components that are derived from the starting materials or are inevitably contained in the production process.

In the invention, like the above-mentioned composite oxide such as magnesia spinel $(MgAl_2O_4)$, a material containing two or more metal elements of titanium, aluminum, silicon and magnesium as ingredients may be used as the starting material powder. In this case, such a material may be considered to be equivalent to the starting material mixture prepared by mixing the individual metal source materials. Based on this consideration, the content of the aluminum source material, the titanium source material, the magnesium source material and the silicon source material in the starting material mixture is controlled to fall within the above-mentioned range.

The starting material mixture may contain aluminum titanate or aluminum magnesium titanate itself, and for example, when aluminum magnesium titanate is used as the constitutive ingredient of the starting material mixture, the aluminum magnesium titanate is a starting material that serves as the titanium source, the aluminum source and the magnesium source.

In the invention, the above-mentioned starting material mixture containing an aluminum source powder, a titanium source powder and optionally a magnesium source powder and a silicon source powder is shaped into a shaped body, and then the shaped body is fired to give an aluminum titanate-based fired body. Firing after shaping makes it possible to retard the shrinkage during firing, as compared with a case where the starting material mixture is directly fired. Accordingly, the aluminum titanate-based fired body to be obtained can be effectively prevented from being cracked. In addition, the porous form of the porous aluminum titanate crystal formed by firing can be kept. The form of the shaped body is not specifically limited, and includes, for example, a honeycomb form, a rod form, a tubular form, a tabular form, and a crucible-like form.

The shaping machine to be used for shaping the starting material mixture includes a uniaxial press, an extruder, a tabletting machine, and a granulator. In extrusion shaping, for example, additives such as a pore-forming agent, a binder, a lubricant, a plasticizer, a dispersant, and a solvent can be added to the starting material mixture, which may be shaped.

The pore-forming agent includes carbon materials such as graphite; resins such as polyethylene, polypropylene, polystyrene, polymethyl methacrylate; vegetable materials such as starch, nut-shell, walnut-shell, corn; ice; and dry ice. The amount of the pore-forming agent to be added is generally from 0 to 40 parts by mass, and preferably from 0 to 25 parts by mass, relative to 100 parts by mass of the total of the aluminum source powder, the titanium source powder, the magnesium source powder and the silicon source powder. The pore-forming agent may contain minor components that are derived from the starting materials thereof or are inevitably contained in the production process.

The binder includes celluloses such as methyl cellulose, carboxymethyl cellulose, sodium carboxymethyl cellulose; alcohols such as polyvinyl alcohol; salts such as lignin sulfonate; waxes such as paraffin wax, microcrystalline wax; and thermoplastic resins such as EVA, polyethylene, polystyrene, liquid-crystal polymer, engineering plastics. The amount of the binder to be added is generally from 2 parts by mass to 20 parts by mass, and preferably from 4 parts by mass to 15 parts by mass relative to 100 parts by mass of the total of the aluminum source powder, the titanium source powder, the magnesium source powder and the silicon source powder. The binder may contain minor components that are derived from the starting materials thereof or are inevitably contained in the production process.

The lubricant and the plasticizer include alcohols such as glycerin; higher fatty acids such a caprylic acid, lauric acid, palmitic acid, alginic acid, oleic acid, stearic acid; and metal salts of stearic acid such as aluminum stearate. The amount of the lubricant and the plasticizer to be added is generally from 0 to 10 parts by mass, and preferably from 1 to 5 parts by mass, relative to 100 parts by mass of the total of the aluminum source powder, the titanium source powder, the magnesium source powder and the silicon source powder. The lubricant and the plasticizer may contain minor components that are derived from the starting materials thereof or are inevitably contained in the production process.

The dispersant includes, for example, inorganic acids such as nitric acid, hydrochloric acid, sulfuric acid; organic acids such as oxalic acid, citric acid, acetic acid, malic acid, lactic acid; alcohols such as methanol, ethanol, propanol; and surfactants such as ammonium polycarboxylate, polyoxyalkylene alkyl ether. The amount of the dispersant to be added is generally from 0 to 20 parts by mass, and preferably from 2 to 8 parts by mass, relative to 100 parts by mass of the total of the aluminum source powder, the titanium source powder, the magnesium source powder and the silicon source powder. The dispersant may contain minor components that are derived from the starting materials thereof or are inevitably contained in the production process.

The solvent includes, for example, alcohols such as monools (methanol, ethanol, butanol, propanol, and the like), glycols (propylene glycol, polypropylene glycol, ethylene glycol, and the like); and water. Above all, water is preferred, and ion-exchanged water is more preferred from the view point of less impurities. The amount of the solvent to be used is generally from 10 parts by mass to 100 parts by mass, and preferably from 20 parts by mass to 80 parts by mass, relative to 100 parts by mass of the total of the aluminum source powder, the titanium source powder, the magnesium source powder and the silicon source powder.

The starting material mixture to be shaped can be prepared by mixing (kneading) the above-mentioned aluminum source powder, titanium source powder, and optionally magnesium source powder, silicon source powder and various additives.

The firing temperature in firing the shaped body is generally 1300°C or higher, preferably 1400°C or higher. The firing temperature is generally 1650°C or lower, preferably 1550°C or lower. The heating rate and the heating pattern up to the firing temperature are not specifically limited. In general, the heating rate may be from 1°C/hr to 500°C/hr. When a silicon source powder is used, preferably, a step of keeping the mixture in a temperature range of from 1100 to 1300°C for 3 or more hours (diffusion step) is provided prior to the firing step. Accordingly, fusion and diffusion of the silicon source powder can be promoted. When the starting material mixture contains an additive combustible organic matter such as a binder, the firing process includes a degreasing step of removing the binder. Degreasing is carried out typically in the heating stage up to the firing temperature (for example, within a temperature range of from 150 to 500°C). In the degreasing step, the heating rate is preferably suppressed as much as possible, and is preferably 300°C/hr or less, more preferably 100°C/hr or less.

In general, the firing is carried out in air, and depending on the type and the amount ratio of the starting material powders to be used (that is, aluminum source powder, titanium source powder, magnesium source powder, silicon source powder), the mixture may be fired in an inert gas such as nitrogen gas or argon gas, or may be fired in a reducing gas such as carbon monoxide gas or hydrogen gas. The firing may be carried out in an atmosphere where the water vapor partial pressure is reduced.

In general, the firing is carried out using an ordinary firing furnace such as a tubular electric furnace, a boxy electric furnace, a tunnel furnace, a far-IR furnace, a microwave heating furnace, a shaft furnace, a reverberating furnace, a rotary furnace, or a roller hearth furnace. The firing may be carried out by batch process, or by continuous process. The firing may be carried out in a static mode or a fluidized mode.

The time to be taken for the firing may be a time enough for transition of the shaped body of the starting material mixture into an aluminum titanate-based crystal, and is generally from 10 minutes to 24 hours though varying depending on the amount of the starting material mixture, the type of the firing furnace, the firing temperature, the firing atmosphere and the like.

As described above, the intended aluminum titanate-based fired body can be obtained. The aluminum titanate-based fired body has a form which almost maintains the form of the shaped body just after shaping. The obtained aluminum titanate-based fired body can be processed into a desired form by cutting and the like.

The aluminum titanate-based fired body obtained by the process of the invention may include a crystal pattern of aluminum titanate or aluminum magnesium titanate, and other crystal patterns of alumina, titania and the like in the X-ray diffraction spectrum thereof. When the aluminum titanate-based fired body obtained by the process of the invention comprises an aluminum magnesium titanate crystal, the body may be represented by a compositional formula, $Al_{2(1-x)}Mg_x Ti_{(1+x)}O_5$ where the value x is 0.03 or more, preferably from 0.03 to 0.15, more preferably from 0.03 to 0.12.

EXAMPLES

The invention is described in more detail with reference to the following Examples, but the invention should not be limited to these. In Examples and Comparative Examples, the aluminum titanate conversion ratio (AT conversion ratio), the thermal decomposition resistance ratio, the three-point bending strength, the coefficient of thermal expansion and the porosity of open pores of the aluminum titanate-based fired body, and the particle size distribution of the starting material powder to be used were determined by the following methods.

(1) AT Conversion Ratio:

The aluminum titanate conversion ratio (AT conversion ratio) was calculated from the integrated intensity ($I_T$) of the peak (assigned to titania-rutile phase (110) face) appearing at the position of $2\theta = 27.4°$, and the integrated intensity ($I_{AT}$) of the peak (assigned to aluminum magnesium titanate phase (230) face) appearing at the position of $2\theta = 33.7°$

in a powdery X-ray diffraction spectrum, by the following formula.

$$\text{AT Conversion Ratio} = I_{AT}/(I_T + I_{AT}) \times 100 \; (\%).$$

(2) Thermal Decomposition Resistance Ratio:

From the obtained aluminum titanate-based fired body, a test piece of about 4 mm × about 4 mm × about 50 mm was cut out. Next, the test piece was subjected to heat treatment comprising heating up to 1100°C at a heating rate of 300°C/hr, then keeping at the temperature for 48 hours, and thereafter cooling to room temperature at a cooling rate of 300°C/hr. The AT conversion ratio $R_0$ (%) before the heat treatment and the AT conversion ratio R (%) after the heat treatment were measured by the above-mentioned method, and the thermal decomposition ratio was obtained as the reduction ratio of the aluminum magnesium titanate crystal in the fired body after the heat treatment based on the following formula:

$$\text{Thermal Decomposition Resistance Ratio} \; (\%) = (R/R_0) \times 100.$$

(3) Three-Point Bending Strength:

A rectangular piece having a length of about 50 mm, a width of about 5 mm and a thickness of about 5 mm was cut out of the aluminum titanate fired body, in the extrusion direction in extrusion shaping of the starting material mixture. The outer surface of the thus-cut, fired body was polished to be smoothness with no roughness, using a sandpaper (#1500). The three-point bending strength of the obtained sample was measured by the method according to JIS R 1601.

(4) Coefficient of Thermal Expansion:

A test piece of about 4 mm × about 4 mm × about 10 mm was cut out of the aluminum titanate-based fired body. Next, the test piece was subjected to heat treatment comprising heating up to 1000°C at a heating rate of 200°C/hr and then immediately cooling to room temperature (25°C). Using a thermomechanical analyzer (SII Technology's TMA6300), the heat-treated test piece was heated from 25°C up to 1000°C at a rate of 600°C/hr, and from the expansion rate of the test piece, the coefficient of thermal expansion $[K^{-1}]$ was calculated by the following formula:

$$\text{Coefficient of Thermal Expansion} \; [K^{-1}] = \text{expansion rate of test}$$
$$\text{piece}/975 \; [K].$$

In this formula,

$$\text{the expansion rate of the test piece}$$
$$\text{means } \{(\text{volume of the test piece when heated up to 1000°C}) -$$
$$(\text{volume of the test piece before heating (25°C)})\}/(\text{volume of}$$
$$\text{the test piece before heating (25°C)}).$$

(5) Porosity of Open Pores:

By an Archimedes method by dipping in water according to JIS R1634, the weight in water M2 (g), the water-saturated weight M3 (g) and the dry weight M1 (g) of the fired body were measured, and the porosity of open pores was calculated by the following formula:

$$\mathrm{Porosity\ of\ Open\ Pores(\%)\ =\ 100\ \times\ (M3\ -\ M1)/(M3\ -\ M2).}$$

(6) Particle Diameter Distribution of Starting Material Powder:

The particle diameter distribution, D10, D50 and D90 of the starting material powder were measured, using a laser diffractiometric particle size analyzer (Nikkiso's Microtrac HRA (X-100)".

<Example 1>

As the starting material powders, the following were used. The prepared composition of the starting material powders mentioned below is, in terms of the alumina [$Al_2O_3$]-equivalent, titania [$TiO_2$]-equivalent, magnesia [MgO]-equivalent and silica [$SiO_2$]-equivalent molar ratio thereof,

$$\mathrm{[Al_2O_3]/[TiO_2]/[MgO]/[SiO_2]\ =\ 34.3\%/50.2\%/9.4\%/6.1\%.}$$

(1) Aluminum source powder:
Aluminum oxide powder A ($\alpha$-alumina powder) having the particle size distribution shown in following Table 1 and in Fig.1

29 parts by mass

(2) Titanium source powder:
Titanium oxide powder (rutile-form crystal) having D50 of 1.0$\mu$m

49 parts by mass

(3) Magnesium source powder:
Magnesia spinel powder having D50 of 5.5 $\mu$m

18 parts by mass

(4) Silicon source powder:
Glass frit (Takara Standard's "CK0832") having D50 of 8.5 $\mu$m

4 parts by mass

To the mixture of the above aluminum source powder, titanium source powder, magnesium source powder and silicon source powder, added were methyl cellulose as a binder in an amount of 5.8 parts by mass, polyoxyalkylene alkyl ether as a surfactant in an amount of 5.8 parts by mass, and glycerin in an amount of 0.5 parts by mass and stearic acid in an amount of 1.5 parts by mass as a lubricant, and further water as a dispersant in an amount of 30 parts by mass, relative to 100 parts by mass of the mixture, and then they were kneaded with a kneader to prepare a mixture (starting material mixture for shaping). Next, the mixture was shaped by extrusion to produce a honeycomb shaped body. In an air atmosphere, the obtained honeycomb shaped body was fired in a process including pre-firing (degreasing) to remove the binder, thereby giving a honeycomb porous fired body (honeycomb structure). The highest temperature in firing was 1450°C, and the keeping time at the highest temperature was 5 hours.

The obtained porous fired body was purvelized in a mortar, and the resulting powder was analyzed through powdery X-ray diffractiometry to give the diffraction spectrum thereof. The powder had a crystal peak of aluminum magnesium titanate. The AT conversion ratio of the powder was 100 %. Table 1 and Fig. 1 show the particle size distribution characteristics of the aluminum oxide powder A used. Table 2 shows the thermal decomposition resistance ratio, the three-point bending strength, the coefficient of thermal expansion and the porosity of open pores of the obtained aluminum titanate-based fired body.

<Example 2>

A honeycomb porous fired body was obtained in the same manner as in Example 1 except that, the following starting material powders were used. Like in Example 1, the prepared composition of the starting material powders mentioned below is, in terms of the alumina [$Al_2O_3$]-equivalent, titania [$TiO_2$]-equivalent, magnesia [MgO]-equivalent

and silica [SiO$_2$]-equivalent molar ratio thereof,

$$[Al_2O_3]/[TiO_2]/[MgO]/[SiO_2] = 34.3\%/50.2\%/9.4\%/6.1\%.$$

(1) Aluminum source powder:
Aluminum oxide powder B ($\alpha$-alumina powder) having the particle size distribution shown in following Table 1 and in Fig. 1

29 parts by mass

(2) Titanium source powder:
Titanium oxide powder (rutile-form crystal) having D50 of 1.0 $\mu$m

49 parts by mass

(3) Magnesium source powder:
Magnesia spinel powder having D50 of 5.5 $\mu$m

18 parts by mass

(4) Silicon source powder:
Glass frit (Takara Standard's "CK0832") having D50 of 8.5 $\mu$m

4 parts by mass

The obtained porous fired body was pulverized in a mortar, and the resulting powder was analyzed through powdery X-ray diffractiometry to give the diffraction spectrum thereof. The powder had a crystal peak of aluminum magnesium titanate. The AT conversion ratio of the powder was 100 %. Table 1 and Fig. 1 show the particle size distribution characteristics of the aluminum oxide powder B used. Table 2 shows the thermal decomposition resistance ratio, the three-point bending strength, the coefficient of thermal expansion and the porosity of open pores of the obtained aluminum titanate-based fired body.

<Comparative Example 1>

A honeycomb porous fired body was obtained in the same manner as in Example 1 except that, the starting material powders mentioned below were used. Like in Example 1, the prepared composition of the starting material powders mentioned below is, in terms of the alumina [Al$_2$O$_3$]-equivalent, titania [TiO$_2$]-equivalent, magnesia [MgO]-equivalent and silica [SiO$_2$]-equivalent molar ratio thereof,

$$[Al_2O_3]/[TiO_2]/[MgO]/[SiO_2] = 34.3\%/50.2\%/9.4\%/6.1\%.$$

(1) Aluminum source powder:
Aluminum oxide powder C ($\alpha$-alumina powder) having the particle size distribution shown in following Table 1 and in Fig. 1

29 parts by mass

(2) Titanium source powder:
Titanium oxide powder (rutile-form of 1.0 $\mu$m          crystal) having D50

49 parts by mass

(3) Magnesium source powder:
Magnesia spinel powder having D50 of 5.5 $\mu$m

18 parts by mass

(continued)

(4) Silicon source powder:

Glass frit (Takara Standard's "CK0832") having D50 of 8.5 μm

4 parts by mass

The obtained porous fired body was pulverized in a mortar, and the resulting powder was analyzed through powdery X-ray diffractiometry to give the diffraction spectrum thereof. The powder had a crystal peak of aluminum magnesium titanate. The AT conversion ratio of the powder was 100 %. Table 1 and Fig. 1 show the particle size distribution characteristics of the aluminum oxide powder C used. Table 2 shows the thermal decomposition resistance ratio, the three-point bending strength, the coefficient of thermal expansion and the porosity of open pores of the obtained aluminum titanate-based fired body.

Table 1

| Aluminum Oxide . Powder | D50 (μm) | D10 (μm) | D90 (μm) | $(D90/D10)^{1/2}$ |
|---|---|---|---|---|
| A | 16.0 | 5.1 | 49.5 | 3.10 |
| B | 11.4 | 4.1 | 30.9 | 2.76 |
| C | 42.2 | 25.1 | 63.4 | 1.59 |

Table 2

| | Thermal Decomposition Resistance Radio (%) | Three-point Bending Strength (MPa) | Coefficient of Thermal Expansion $(x10^{-6}K^{-1})$ | Porosity of Open Pores (%) |
|---|---|---|---|---|
| Example 1 | 100 | 4.23 | 0.89 | 35.1 |
| Examples 2 | 100 | 4.07 | 0.58 | 34.4 |
| Comparative Example 1 | 100 | 3.43 | 0.75 | 36.5 |

The mode and Examples for carrying out the invention disclosed at this time are exemplification in all aspects, and those should be considered unlimitedly. The scope of the invention is indicated not by the above-mentioned description but by the claims, and is intended to comprise all variations in the meaning and in the range of claims-equivalent.

Industrial Applicability

The aluminum titanate-based fired body obtained in the invention can be used favorably, for example, for tools for firing furnaces such as crucibles, setters, saggers, refractories; exhaust gas filters, exhaust gas converters and catalyst carriers for use for exhaust gas purification in internal combustion engines such as diesel engines, gasoline engines; ceramic filters for use for filtration filters for edibles such as beer, and selective permeation filters for selectively permeating vapor components formed in oil purification, such as carbon monoxide, carbon dioxide, nitrogen, oxygen; electronic parts such as substrates and capacitors. Above all, when used for ceramic filters and the like, the aluminum titanate-based fired body of the invention can maintain a good filtering capability for a long period of time, because the fired body is excellent in thermal decomposition resistance and mechanical strength (bending strength) and further excellent in low thermal expansion properties.

**Claims**

1. A process for producing an aluminum titanate-based fired body, comprising a step of firing a shaped body of a starting material mixture which contains an aluminum source powder and a titanium source powder,

the aluminum source powder satisfying the following formula (1):

$$(D90/D10)^{1/2} \geq 2 \qquad (1)$$

wherein D90 is a particle diameter corresponding to a cumulative percentage of 90 % on a volume basis and D10 is a particle diameter corresponding to a cumulative percentage of 10 % on a volume basis, and these are determined from a particle size distribution of the aluminum source powder measured by a laser diffractometry.

2. The process according to claim 1, wherein a ratio of a $Al_2O_3$-equivalent molar amount of the aluminum source powder to a $TiO_2$-equivalent molar amount of the titanium source powder (the $Al_2O_3$-equivalent molar amount of the aluminum source powder / the $TiO_2$-equivalent molar amount of the titanium source powder) in the starting material mixture is from 35/65 to 45/55.

3. The process according to claim 1 or 2, wherein a particle diameter of the titanium source powder corresponding to a cumulative percentage of 50% on a volume basis is from 0. 5 to 35 $\mu$m.

4. The process according to any one of claims 1 to 3, wherein the starting material mixture further contains a magnesium source powder, a ratio of a MgO-equivalent molar amount of the magnesium source powder to a total of a $Al_2O_3$-equivalent molar amount of the aluminum source powder and a $TiO_2$-equivalent molar amount of the titanium source powder is from 0.03 to 0.15.

5. The process according to claim 4, wherein a particle diameter of the magnesium source powder corresponding to a cumulative percentage of 50% on a volume basis is from 0.5 to 30 $\mu$m.

6. The process according to any one of claims 1 to 5, wherein the starting material mixture further contains a silicon source powder.

7. The process according to claim 6, wherein the silicon source powder is feldspar, glass frit, or a mixture thereof.

8. The process according to claim 6 or 7, wherein a ratio of a $SiO_2$-equivalent molar amount of the silicon source powder to a total of a $Al_2O_3$-equivalent molar amount of the aluminum source powder and a $TiO_2$-equivalent molar amount of the titanium source powder is from 0.0011 to 0.123.

9. The process according to any one of claims 6 to 8, wherein a particle diameter of the silicon source powder corresponding to a cumulative percentage of 50% on a volume basis is from 0.5 to 30 $\mu$m.

10. The process according to any one of claims 1 to 9, wherein the shaped body is a honeycomb.

11. The process according to any one of claims 1 to 10, wherein a firing temperature is from 1300 to 1650 °C and a firing time is from 10 minutes to 24 hours.

Fig.1

<table>
<tr><td align="center">**INTERNATIONAL SEARCH REPORT**</td><td colspan="2">International application No.<br>PCT/JP2009/071595</td></tr>
</table>

| A. CLASSIFICATION OF SUBJECT MATTER |
|---|
| *C04B35/46(2006.01)i* |
| According to International Patent Classification (IPC) or to both national classification and IPC |

| B. FIELDS SEARCHED |
|---|
| Minimum documentation searched (classification system followed by classification symbols)<br>C04B35/46-35/478, C04B38/00-38/10 |
| Documentation searched other than minimum documentation to the extent that such documents are included in the fields searched<br> Jitsuyo Shinan Koho    1922-1996   Jitsuyo Shinan Toroku Koho   1996-2010<br> Kokai Jitsuyo Shinan Koho   1971-2010   Toroku Jitsuyo Shinan Koho   1994-2010 |
| Electronic data base consulted during the international search (name of data base and, where practicable, search terms used) |

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-87797 A  (Ohcera Co., Ltd.),<br>07 April 2005 (07.04.2005),<br>claims 1 to 8; paragraphs [0008], [0009],<br>[0011] to [0017], [0029], [0040] to [0052]<br>& US 2006/0239880 A1    & EP 1652830 A1<br>& WO 2005/009918 A1 | 1-11<br>2 |
| X<br>Y | JP 2005-46667 A  (Ohcera Co., Ltd.),<br>24 February 2005 (24.02.2005),<br>claims 1 to 7; paragraphs [0008], [0009],<br>[0011] to [0014], [0018] to [0021], [0024],<br>[0026], [0032] to [0040]<br>& US 2006/0239880 A1    & EP 1652830 A1<br>& WO 2005/009918 A1 | 1,3-11<br>2 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br> 18 February, 2010 (18.02.10) | Date of mailing of the international search report<br> 09 March, 2010 (09.03.10) |
|---|---|
| Name and mailing address of the ISA/<br> Japanese Patent Office | Authorized officer |
| Facsimile No. | Telephone No. |

Form PCT/ISA/210 (second sheet) (April 2007)

<table>
<tr><td colspan="2" align="center">**INTERNATIONAL SEARCH REPORT**</td><td>International application No.<br>PCT/JP2009/071595</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2008-239401 A  (Kyocera Corp.),<br>09 October 2008 (09.10.2008),<br>claims 1, 2; paragraphs [0001], [0011], [0038]<br>to [0054]<br>(Family: none) | 1,2,4,6,9-11 |
| X | JP 2008-239408 A  (Kyocera Corp.),<br>09 October 2008 (09.10.2008),<br>claims 1, 2; paragraphs [0001], [0011], [0021],<br>[0041] to [0054]<br>(Family: none) | 1,2,6,9-11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 05105704 A